(19) Europäisches Patentamt
European Patent Office
Office européen des brevets

(11) EP 4 094 587 A1

(12) EUROPEAN PATENT APPLICATION
published in accordance with Art. 153(4) EPC

(43) Date of publication:
30.11.2022 Bulletin 2022/48

(51) International Patent Classification (IPC):
A23L 7/10 (2016.01)          C12N 9/26 (2006.01)
C12N 9/42 (2006.01)

(21) Application number: 21745103.8

(22) Date of filing: 14.01.2021

(52) Cooperative Patent Classification (CPC):
A23L 7/10; C12N 9/2408; C12N 9/2434

(86) International application number:
PCT/JP2021/000966

(87) International publication number:
WO 2021/149574 (29.07.2021 Gazette 2021/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 22.01.2020 JP 2020008252

(71) Applicant: Nishimoto Co., Ltd.
Kobe-shi, Hyogo, 651-0084 (JP)

(72) Inventors:
• SAKAMOTO Koji
Kure-shi, Hiroshima 737-0112 (JP)
• TOYOTA Fumihiko
Fukuyama-shi, Hiroshima 720-0076 (JP)

(74) Representative: Marks & Clerk LLP
15 Fetter Lane
London EC4A 1BW (GB)

(54) PROCESSED CEREAL, METHOD FOR MANUFACTURING PROCESSED CEREAL, AND METHOD FOR MANUFACTURING SOFTENED PROCESSED CEREAL

(57) [Problem]
To provide a processed grain product enabling manufacturing of a softened processed grain product for individuals who are elderly or who have difficulty in chewing or swallowing that maintains a post-post-threshing or post-polishing shape.
[Means for Resolution]
The processed grain product according to the present invention is a processed grain product wherein the post-post-threshing or post-polishing shape is maintained, wherein a portion of the starch that is included in the processed grain product gelatinized, and that includes an externally derived degrading enzyme in a state that has enzymatic activity, and wherein the water content is less than 15%.

[FIG. 1]

(Embodiment 3)          (Embodiment 4)          (Unprocessed)

**Description**

[Field of Technology]

The present invention relates to a processed grain product used in the production of a softened processed grain product for individuals that are elderly or that have difficulty in chewing or swallowing, relates to a manufacturing method for the processed grain product, and relates to a manufacturing method for a softened processed grain product.

[Background Art]

In Japan, rice is a staple food, and is the most important foodstuff in providing calories. Grains, such as corn and wheat, are used as staple foods throughout the world. However, special-needs diets for individuals who are elderly or who have difficulty in chewing or swallowing must be superior in facilitating chewing or swallowing, and in terms of safety and nutrition. Because of this, given that cooked rice for able-bodied individuals is hard, cooked rice for special-needs diets used by individuals who are elderly or who have difficulty in chewing or swallowing, and the like, is provided in the form of congee. At present, congee of a variety of harnesses is manufactured through increasing the ratio of water to rice; however, when compared to cooked rice for able-bodied individuals, congee is low in caloric content when compared to an equal volume of cooked rice for an able-bodied individual, and is unable to provide equal caloric value without consumption of large quantities. Moreover, congee, as a staple food for everyday dining, may negatively impact quality of life. That is, in addition to being soft and easy to eat, cooked rice for individuals with difficulty in chewing or swallowing must also prevent aspiration in special-needs diets for individuals with difficulties in chewing or swallowing, and must be tasty enough to eat every day. Because of this, there is the need for cooked rice that looks and tastes similar to cooked rice for able-bodied individuals, having the physical properties of being soft and easy to eat, that is less prone to aspiration, and that is able to provide energy through consumption of an ordinary volume. Note that the best way to apply maximum safety in terms of aspiration is to soften the rice. On the other hand, processed grain products of grains other than rice are hard, so are difficult to eat as normal foodstuffs, let alone for special-needs diets. There is also the need to improve the taste.

One technology by which to change the physical properties of foodstuffs is a technology wherein enzymes that are high-molecular weight substances that are thermally unstable are introduced rapidly into the foodstuff. Conventionally, methods have been reduced to practice wherein enzymes have been introduced into foodstuffs through physical methods, such as pressure methods or vacuum methods, injection methods, methods that uses a tumbling apparatus, or the like. These methods are require expensive equipment, such as pressurizing equipment, vacuum equipment, injector equipment, and the like. Moreover, when applied to raw rice, which has a dense crystal structure, the use of these methods has not produced satisfactory effects.

Conventionally, there have been a variety of known methods for introducing enzymes into foodstuffs. For example, Patent Document 1 describes a method for manufacturing a softened foodstuff wherein enzymes are introduced into the tissue of a plant foodstuff material to soften the material while maintaining the shape of the original foodstuff material. Patent Document 2 describes a method wherein plant foodstuffs that have been frozen and thawed, after adjusting the salt concentration, and the like, of liquid seasoning, are soaked in an enzyme solution, and a vacuum is drawn to introduce the enzyme into the tissue, to provide seasoning and perform pressure heating sterilization without disrupting the shape. Patent Document 3 describes a method for manufacturing a prepared food product wherein the enzyme introducing technology can be carried out easily in the workplace such as a kitchen facility, or the like, where the introduction of enzymes into the foodstuff material, the enzymatic reactions, and the heating step are all carried out in the same packaging container in consideration of sanitation and of preventing disruption of the shape during the steps of manufacturing, transporting, and distributing the softened foodstuff material. Patent Documents 4 and 5 describe methods for low-pressure processing in an enzyme solution after heating using saturated steam.

One known method for softened cooked rice is that wherein the technology of Patent Document 1 is applied to add amylase, or the like, to the cooked rice, but this is timeconsuming and laborious in hospitals and welfare facilities where the food is prepared in a kitchen, and adjusting the moisture content and adjusting the hardness is difficult. In industry, browning during storage after cooking is also a problem. While Patent Document 6, for example, describes a method wherein an enzyme such as phosphodiesterase, hemicellulase, cellulase, $\alpha$-glucosidase, or the like, is added either before cooking or after cooking the grain, it is unclear as to whether or not this can achieve softness to the degree required for a special-needs diet, and commercially available unwashed rice is used without modification. In order to soften to a hardness for a special-needs diet, the enzyme must be introduced into the interior of the rice grain. Moreover, when softening with $\alpha$-amylase is not possible to achieve a uniform hardness with unmodified raw rice. While a modifying agent that enables amylase to act on starch is described in Patent Document 7, there is no description of the effect of the amylase on the grain itself. Patent Document 8 describes a rice modifying agent that includes a starch wherein the inclusion rate of $\alpha$-glucosidase and/or $\beta$-amylase and amylopectin is no less than 75%, for the purpose of improving the flavor of the cooked rice and preventing retrogradation (degradation over time), but this is nothing more than addition of α-glucosidase and/or β-amylase to rice prior to cooking, and the object is not that of softening the rice.

Patent Document 9 describes a method for introducing an enzyme by carrying out a low-pressure process after microwave drying of the foodstuff, and impregnating with a degrading enzyme, but the object is not that of softening. Moreover, the foodstuff is not rice, and this is nothing more than use as a preprocessing method for low-pressure impregnation for a foodstuff, other than a grain, with a loose tissue structure. Patent Document 10 describes processed rice that has not undergone a cooking process, in which a drying process is performed as a preprocess on the rice, to adjust the included moisture content to no less than 15%, which is greater than the moisture content of ordinary rice (which is between 12 and 14%). The object of this rice is to shorten the cooking time, not that of softening the rice. Patent Document 11 describes a method for manufacturing processed rice that enables cooking in a microwave oven, and has the distinctive feature of subjecting the raw material rice to a freezing process, steaming the raw rice, and then adding cold or hot water to the steamed rice to cause it to absorb water, followed by freeze-drying the steamed rice that has absorbed water; however, this is not a method for manufacturing cooked rice that has soft physical properties such as for a special-needs diet.

Patent Document 12 describes the element of being an easily swallowed gruel-like foodstuff made through mixing a starch powder and a gelatin powder into a gelatinized rice and/or a powder thereof. This gelatinized rice is manufactured through the drying after steaming (cooking) rice that has been soaked in water to absorb the water, followed by crushing, so the post-threshing shape is lost. Patent Document 13 describes fastcooking rice that can be cooled rapidly to room temperature after carrying out a firststage gelatinizing process through microwave heating and a second-stage gelatinizing process through roasting; however the object is not that of softening rice.

[Prior Art Documents]

[Patent Documents]

[Patent Document 1] Japanese Patent 3686912
[Patent Document 2] Japanese Unexamined Patent Application Publication 2006-223122
[Patent Document 3] Japanese Unexamined Patent Application Publication 2008-11794
[Patent Document 4] Japanese Unexamined Patent Application Publication 2010-115164
[Patent Document 5] Japanese Unexamined Patent Application Publication 2015-023800
[Patent Document 6] Japanese Unexamined Patent Application Publication 2011-172564
[Patent Document 7] Japanese Unexamined Patent Application Publication H7-31396
[Patent Document 8] Japanese Unexamined Patent Application Publication 2011-193876
[Patent Document 9] Japanese Unexamined Patent Application Publication 2008-187908
[Patent Document 10] Japanese Unexamined Patent Application Publication 2003-153657
[Patent Document 11] Japanese Unexamined Patent Application Publication 2008-131887
[Patent Document 12] Japanese Unexamined Patent Application Publication 2002-17275
[Patent Document 13] Japanese Unexamined Patent Application Publication H6-70707

[Summary of the Invention]

[Problem Solved by the Present Invention]

However, none of Patent Documents 1 through 13 has a description of a processed grain product wherein the post-threshing or post-polishing shape is maintained where an externally derived degrading enzyme in a state that has enzymatic activity is included, a portion of the starch included in the processed grain product is gelatinizing, without gelatinizing all of the starch, and the water content is reduced. In light of this, none of the methods described above can supply easily a softened processed grain product of rice, or the like, that is lacking in neither flavor nor nutrition, and that is soft and that preserves the original shape of the grain, without using specialty equipment.

Consequently, an object of the present invention is to provide a softened processed grain product of rice, or the like, that is lacking in neither flavor nor nutrition, that is soft but that maintains the original shape of the grain, through cooking easily, without using specialty equipment during cooking, or the like. Moreover, an object is to provide a processed grain product that is an intermediate product, prior to cooking, that enables a long shelf life, and to provide a simple manufacturing method for a processed grain product without requiring specialty equipment, and also to provide a simple method for producing a softened processed grain product without using specialty equipment.

[Means for Resolution]

As the result of earnest research to solve the problems set forth above, the present inventors discovered a processed grain product wherein the post-post-threshing or post-polishing shape is maintained, that includes an externally derived degrading enzyme in a state that has enzymatic activity, and wherein that which has less than 15% water content has a long shelf life.

The present inventors arrived at the present invention based on the knowledge described above. The result was the inventions in [1] through [14], below:

[1] A processed grain product that maintains a post-post-threshing or post-polishing shape, wherein:

a portion of the starch included in the processed grain product is the gelatinized, and the degree of gelatinization is between 15% and 85%;
an externally derived degrading enzyme is included in a state that has enzymatic activity; and
the water content is less than 15%.

[2] A processed grain product set forth in [1], wherein:
the externally derived degrading enzyme includes at least $\alpha$-amylase.
[3] A processed grain product set forth in [2], wherein:
the externally derived degrading enzyme further includes $\beta$-amylase and/or glucoamylase.
[4] A processed grain product set forth in [2], wherein:
the processed grain product includes $\alpha$-amylase with a lysing enzymatic activity of no less than 10 units/g.
[5] A processed grain product set forth in any one of [1] through [4], wherein:
a raw material for the processed grain product is non-glutinous rice.
[6] A processed grain product set forth in [1], wherein:

a raw material for the processed grain product is other than non-glutinous rice; and
the externally derived degrading enzyme includes a degrading enzyme that is at least one selection from a group including cellulase, pectinase, and hemicellulase.

[7] A processed grain product set forth in [6], wherein:
the processed grain product includes a degrading enzyme of at least one type selected from a group including cellulase, pectinase, and hemicellulase, having degrading enzymatic activity of no less than 10 units/g.
[8] A method for manufacturing a processed grain product that maintains post-threshing or post-polishing shape, and wherein the water content is less than 15%, including:

a step for drying the grains before or after post-threshing or polishing to adjust the water content to between 4% and 12%;
a step for causing an enzyme solution or enzyme powder that includes a degrading enzyme to contact the grain after drying with the water content of the grain in a range that is maintained at less than 15%.

[9] A processed grain product manufacturing method set forth in [8], wherein:
the drying of the grain is carried out at a temperature that is no greater than 85°C.
[10] A processed grain product manufacturing method set forth in [8] or [9], wherein:
the drying of the grain gelatinized is a portion of the starch that is included in the grain.
[11] A method for manufacturing a softened processed grain product that maintains a post-threshing or post-polishing shape, including:

a step for drying the grains before or after post-threshing or polishing to adjust the water content to between 4% and 12%; and
a step for causing an enzyme solution or an enzyme powder that includes a degrading enzyme to contact the grain after drying; and
the grain that has been contacted by the degrading enzyme is heated to soften the grain through an enzymatic reaction.

[12] A softened processed grain product manufacturing method set forth in [11], wherein:
the heating of the grain into which the degrading enzyme has been introduced is carried out until gelatinizing, after being carried out for at least 10 minutes at less than the boiling temperature as a mixture with water.

[13] A softened processed grain product manufacturing method as set forth in [11] or [12], wherein:
the softened processed grain product includes no less than 100 mg/100 g of glucose or maltose, and the water content is between 60% and 90%.
[14] A softened processed grain product manufacturing method set forth in any of [11] through [13], wherein:
the softened processed grain product has a measured value for hardness, at a temperature of 60°C, of between $5.0 \times 10^2$ N/m$^2$ and $5.0 \times 10^4$ N/m$^2$.

[Effects of the Invention]

The present invention enables provision of a processed grain product that maintains the post-threshing or post-polishing shape, wherein an externally derived starch degrading enzyme in a state with enzymatic activity is included and a water content of less than 15% is maintained, which can be distributed in a state with a long shelf life. Use of such a processed grain product enables simple manufacturing, without using specialty equipment, of a softened processed grain product for individuals who are elderly or who have difficulty in swallowing or chewing. Here "processed grain product" refers to a state after cooking and adding water in a state wherein an enzyme is included, and prior to a heating process. "Softened processed grain product" refers to a state wherein water has been added to an enzyme-including rice or enzyme-including grain, and softening has been performed through a cooking or heating process.
Moreover, the softened processed grain product that has been heated after water has been added, using a processed grain product that includes an enzyme, according to the present invention, or the softened processed grain product wherein, after a prescribed amount of moisture has been removed from the grain, an enzyme solution is sprayed, the material is soaked in an enzyme solution, or an enzyme powder is applied and a prescribed amount of water is added and a heating process is performed, will, unlike congee, have the same moisture content as normal cooked rice, enabling the same flavor as ordinary cooked rice to be experienced. While the amount of added water can be increased to form congee, when compared to a congee to which the same amount of water has been added, the result will be substantially softer and easier to eat. Such a softened processed grain product can provide a special-needs diet that is no different in appearance from a normal meal. Elderly individuals with reduced chewing or swallowing capabilities can confidently eat softened rice with the same appearance as that of an able-bodied individual. Unlike congee, the amount of added water content is minimal, making it possible to provide the same caloric value even if the volume consumed is small. The same effects are demonstrated with other grains as well.

[Brief Descriptions of the Drawings]

FIG. 1 is a photograph of the processed rice products of Embodiments 3 and 4, and of unprocessed rice.
FIG. 2 is a photograph of the softened cooked rice of Embodiment 4 and the cooked rice of Reference Examples 1 and 2.

[Forms for Carrying Out the Present Invention]

[Processed Grain Product]

The processed grain product according to the present invention must maintain the post-threshing or post-polishing shape. If the shape were not maintained at the processed product stage, the foodstuff would be visually unappealing, rather than maintaining its visual appearance, when even after passing through the steps of cooking, and the like, thereafter.
In the present invention, "maintaining the shape" may be maintaining the shape to a degree in which the shape of the grain can be identified visually. The post-post-threshing or post-polishing shape of the grain, such as spherical, ellipsoidal, oblate ellipsoidal, or the like, may be preserved in a casual view. That wherein the shape is greatly disrupted through breaking down or fracturing more than the shape of the raw material grain, or that which is powdery, with the particle size clearly reduced, is not included.
In the present invention, the "processed grain product wherein the shape is maintained" refers to that wherein, for a grain that has undergone a polishing or post-threshing process, or polished rice, or polished barley, or barley that has been flattened through pressing, that is, for rice, that which brown rice or in a form that has undergone a polishing process, or, for barleys, that which is in the form of grain barley, round barley, or pressed barley, or oatmeal wherein an oat has undergone a post-threshing process, or, for another grain, that which is in the shape of a grain, the grain that includes the enzyme exhibits a state wherein the original shape of the raw material used remains. The state wherein the original shape of the raw material used remains includes shrinking through drying and partial discoloration through heating, but indicates that the number of enzyme-including grains that have sites that are clearly visually defective are no more than 30% of the total.

The processed grain product according to the present invention includes an externally derived degrading enzyme in a state that has enzymatic activity. In the present invention, the "processed grain product that includes a degrading enzyme" includes not only a degrading enzyme within the interior of the processed grain product, but also includes that wherein the degrading enzyme is adhered to only the surface of the processed grain product.

In the processed grain product according to the present invention, a portion of the included starch is gelatinizing through heated drying. Through heated drying, the degree of gelatinization of the starch will be higher than the degree of gelatinization of the post-threshing or post-polishing grain. Moreover, because gelatinization is under low-moisture conditions, preferably the gelatinization is not complete gelatinization, as this would tend to degrade quality, but rather is in a range of between 15% and 85%. Moreover, for the optimal relationship between drying temperature and drying time, and to promote the enzymatic reaction, preferably it is between 20% and 70%, and more preferably between 30% and 60%. Because hot air drying that has high drying efficiency can be used, and because gelatinizing a portion of the starch contributes to promoting the enzymatic reaction, it is necessary to gelatinize a portion of the starch of the processed grain product. The use of heated drying, with high drying efficiency, enables the moisture removal step, which is necessary in preprocessing, to be achieved easily and inexpensively. The water content of the processed grain product and the degree of gelatinization can be measured through the methods described in the embodiments, set forth below.

The water content of the processed grain product in the present invention is less than 15%. By impregnating an optimal amount of the enzyme liquid, which is less than the amount of moisture removed through the heated drying, the water content of the processed grain product is adjusted to less than 15%, suppressing the growth of microorganisms, enabling distribution in the state that has a long shelf life, similar to that of an ordinary grain. Preferably the water content of the processed grain product is between 8% and 14%, and more preferably, from the dual perspective of impregnation rate and drying costs, is between 10% and 13%.

Because the processed grain product according to the present invention has, in this way, an externally derived degrading enzyme, it will tend to be softer than an ordinary grain when cooked, enabling easy production of a softened processed grain product without specialty equipment.

The raw material grain used in the present invention, without limitation, may be, for example, rice, barley, sawa millet, foxtail millet, corn, adlay, oats, or the like. In the present invention, any of these grains may be used in a polished or threshed state. In particular, rice, as a staple food, is useful, and can be used in the form in which it is commonly distributed, such as brown rice, polished rice, or no-wash rice. Moreover, for barley, pressed barley or grain barley may be used as-is. For oats, oatmeal can be used as-is.

When rice is used as the raw material grain, with brown rice or polished rice a heating or drying step is carried out in order to remove moisture that is adhered after carrying out the rice washing step, costing energy and time. Because of this, unwashed rice wherein the rice washing step is omitted is particularly effective.

The drying step for the raw material grain has a great effect on the amount of degrading enzyme solution that is impregnated, the amount of softening, the moisture absorption rate (the amount of swelling of the rice), and the speed with which moisture is absorbed. The moisture content of polished grains of polished rice and grains as ordinarily distributed is between 13% and 14%.

Drying to adjust the water content of the grain to between 4% and 12% causes the grain to be suitable for softening by cooking. The drier the grain, the greater the amount of impregnation of the enzyme and the greater the water absorption rate during cooking, and the faster the absorption of water, facilitating softening. From a cost and quality perspective, the water content of the grain after drying should be between 4% and 12%, preferably between 5% and 11%, and more preferably between 6% and 10%.

Additionally, when heating during the drying step, preferably the degree of gelatinization of the grain is adjusted to greater gelatinization than the post-threshing or post-polishing grain, where the degree of gelatinization after drying is, for example, no less than 15%, and more preferably between 30% and 60%. Note that the water content and degree of gelatinization of the processed grain product can be measured through the method described in the embodiments set forth below.

The raw material grain drying step may use an ordinary drying method. Preferably a simple method is carried out without requiring specialty equipment. Heated drying is inexpensive because it is simple and can be performed without specialized equipment, and is preferred for gelatinizing at least a portion of the β-starch of the raw rice in the heating process.

Note that inexpensive hot air drying or superheated steam drying may be used, and heating can be achieved rapidly through the use of microwaves, which is dielectric heating. In producing the softened processed grain product, the use of low-temperature drying, such as vacuum drying, enables production of a cooked rice that is less prone to cracking, so has a better visual appearance.

In the processed grain product according to the present invention, although the endogenous enzymes in the grains are inactivated when drying is carried out at a high temperature, at the same time the gelatinized starch is be included through the moisture that was included.

There is no particular limitation on the temperature in the drying step for the raw material grain in producing the softened processed grain product. In order to dry rapidly, heating may be to no less than 60°C, or preferably no less than 80°C. Moreover, the temperature of the drying step may be adjusted to no greater than 85°C, to prevent deactivation of the endogenous enzymes within the grains. Note that the drying may be low-temperature drying, such as vacuum drying, freeze drying, or the like.

The method for impregnating the degrading enzyme into the dried grain may be spraying or coating a suitable amount of the enzyme solution onto the surface of the grain, or may be through immersing the dried grain in the enzyme solution. In producing the processed grain product, the water content of the processed grain product can be adjusted through adjusting the amount of sprayed or coated enzyme solution, or the immersion time, by impregnating the optimal amount of enzyme solution, which is less than the amount of water content removed through heated drying. If necessary, the externally derived enzyme may be applied and dried under conditions that do not deactivate the enzyme. The water content of the processed grain product after additional drying, if necessary, after the degrading enzyme impregnation process must be less than 15%, and in order to optimize the absorption rate into the grain and the amount of water supplied, preferably is between 8% and 14%, and more preferably between 10% and 13%. Adjusting the water content of the processed grain product to less than 15% suppresses the growth of microorganisms, enabling distribution in a state with a long shelf life, similar to that of ordinary grain.

The processed grain product that has been caused to include the enzyme enables production a softened processed grain product through simply cooking, or the like through immersing in water and heating, without requiring special equipment.

The time over which the processed grain product is immersed in water can be selected as appropriate.

On the other hand, in the process of producing the softened processed grain product, the softened processed grain product can be produced through immersion in the enzyme solution and heating in that state. In the process of producing the processed grain product, the product can be drained immediately after immersion in the enzyme solution, and the product can be cooked and heated after adding water.

Moreover, if a raw material wherein the enzyme has been applied or impregnated is manufactured and sold, the user will be able to cook and heat the product after merely adding water. A process such as further immersing in water after immersing in the enzyme solution, or an impregnating process such as drawing a vacuum, pressing, or the like, while immersed, may be carried out, to perform a process so as to impregnate with a greater amount of the enzyme. Preferably the water temperature at this time is no greater than 65°C, so as to not deactivate the enzyme.

Immersing, in water, the grain that has undergone the drying process increases the amount of water absorption more than for a raw material prior to the drying process, increasing the amount of absorption. In contrast to the 1.28x when the volumetric swelling of rice is measured after 10 minutes after the commencement of water absorption when a commercially available unwashed rice, with a water content of 14%, is immersed in cold water, 1.5x was achieved for unwashed rice wherein moisture has been removed to a water content of 12%. At this time, when amylase is included in the immersing solution and amylase is impregnated, the grain expands and swells, so that, upon cooking, the foodstuff, such as the rice, or the like, after cooking, will be soft, enabling it to be used as-is by an individual that has difficulty in chewing or swallowing. Note that the time of immersion in the water or the enzyme solution can be shortened as appropriate to prevent collapse of the grain.

The time over which the grain is immersed in the enzyme solution after removal of the moisture through drying can be set as appropriate, and the impregnation with the enzyme may be for a time between 1 second and 60 minutes. To prevent collapse of the grain, preferably it is between 5 seconds and 30 minutes, and more preferably between 10 seconds and 20 minutes.

Note that, envisioning mass production, for the method for producing the softened grain, a method may be used wherein cooking is by heating after adding ordinary water, after draining after a short immersion in the enzyme solution as the immersing step.

Instead of immersion, coting may be through forming the enzyme solution into a mist. In this case, the time for impregnation of the enzyme should be no greater than 20 minutes, preferably no greater than 10 minutes, and more preferably no greater than 30 seconds. In this case, preferably the shorter the time for impregnating with the enzyme, the greater the enzyme concentration used. However, the step for immersing the dry raw rice in the enzyme solution, or coating the enzyme solution onto the dry raw rice may be an enzyme impregnating step and a reacting step for enzymatic hydrolysis of starch or polysaccharides in tissue, such as cellulase.

The amount of moisture added in the method for cooking while heating can be selected as appropriate through draining after immersing briefly in the enzyme solution and adding a normal amount of water, where this will have an effect on the hardness, adhesion, and cohesion after cooking. When producing a foodstuff that is similar to a foodstuff for able-bodied persons, preferably the amount of water added is between 1.3 times and 2.0 times the weight of the raw rice.

If the amount of water added were between 2.0 and 2.5 times this would reduce the adhesion. A congee that can be consumed even by individuals that have difficulty in swallowing can be produced by adding water at 5 times the weight, more than the 2.5 times. Regardless, the product will be soft, and the hardness, adhesion, and cohesion can be controlled, where the water content inclusion ratio will be low when compared to cooked products of equal hardness that have not been treated, making it possible to produce a product with a higher calorie content that is more attractive visually.

In the present invention, the grain that is the raw material is subjected to drying to impregnate a sufficient amount of the degrading enzyme into the raw material grain, but the endogenous enzyme within the grain is inactivated when the drying temperature is high at that time. Because of this, in order to soften the grain it is necessary to cause an externally derived degrading enzyme to be included in the grain after drying. The externally derived degrading enzyme may be the same enzyme that the raw material grain had to begin with, or may be a different enzyme.

If the raw material for the processed grain product according to the present invention is non-glutinous rice, preferably at least $\alpha$-amylase is included as an externally derived degrading enzyme, and the inclusion of $\beta$-amylase or glucoamylase, to impart sweetness, is more preferred. To impregnate the degrading enzyme, a method such as immersing in the enzyme solution is simple, and thus preferred. The concentration of the $\alpha$-amylase in the enzyme solution can be set as appropriate, but between 0.01 mass% and 10 mass%, for example, is preferred. The concentration of the $\beta$-amylase in the enzyme solution can be set as appropriate, but a concentration between 0.01 mass% and 10 mass% is preferred. In particular, for the proportion with which the $\beta$-amylase is used, the same amount as the $\alpha$-amylase, or no more than 3x is preferred. When used in the same amount as the $\beta$-amylase, glucoamylase can also provide a good flavor. Oligosaccharides can be generated and applied through the use of $\beta$-glucosidase, which can contribute to the prevention of retrogradation of the starch.

Softening the grain requires the starch to be broken down, but when used for individuals with difficulty in chewing or swallowing, or used in baby food, preferably the dietary fiber is broken down as well. In particular, for grains other than rice, such as, for example, barley, awa millet, or foxtail millet instead of the $\alpha$-amylase or in addition to the $\alpha$-amylase, preferably an enzyme having the effect of breaking down various dietary fibers, such as cellulase, hemicellulase, pectinase, or the like, is added. In order to exhibit a softening effect for individuals who have difficulty in chewing or swallowing, preferably the cellulase activity of the grains to which these enzymes are added is no less than 20 units/g, and to better control hardness, preferably is no less than 30 units/g. Note that cellulase includes enzymes such as $\beta$-glucanase that lyse glycoside bonds. In addition, hemicellulase includes enzymes such as xylanase that lyse a variety of carbohydrate chains.

Softening through the enzymatic reaction is carried out also in the cooking step, in addition to the step for immersing in the enzyme solution. The softening of particles takes place through gelatinization and lysing of starches while the temperature is ramping, after the start of heating, up to the 80°C that is the enzyme deactivating temperature. Because of this, softening will be promoted if the heating speed is slow, whereas rapid healing serves to impede softening. Moreover, during this time reducing sugars are generated through enzymatic hydrolysis of starch. While the amount of reducing sugar (in terms of a glucose equivalent) generated by heating rice to 120°C for 30 minutes is 0.5 mg/g, in no-wash rice that includes $\alpha$-amylase the amount of the reducing sugar (as a glucose equivalent) when cooking for 30 minutes at 120°C is 1.5 mg/g, making it possible to impart sweetness. Furthermore, by adding $\alpha$-amylase, the amount of reducing sugar (as a glucose equivalent) in cooked rice heated for 10 minutes in a range between 60°C and 90°C will reach between 10.4 mg/g and 17.1 mg/g, which can impart significant sweetness. Thus, for the heating speed in cooking prior to the commencement of boiling, a gradual heating speed that is slower than a heating speed of 10°C/minute is best. Securing adequate heating time prior to boiling can prevent collapse of the rice grain, through suppressing convection currents within the cooking vessel. For example, in the cooking step, preferably the grain into which the degrading enzyme has been introduced is heated for at least 10 minutes at a temperature that is less than boiling, and preferably, after absorption of water into the grains been completed, heating is carried out until gelatinization has advanced sufficiently.

The heating process, such as cooking, to produce the softened processed grain product can be carried out using even in a home rice cooker, without requiring specialty equipment. The rice cooker having a low-temperature cooking function that can control the temperature in the range of between 60°C and 90°C is more preferred. For commercial applications, an existing dielectric heating kettle for cooking rice, an electric or gas rice cooker, a steam convection oven, or a superheated steam heating system may be used. Cooking using pressure through a pressure cooker or pressurized heat sterilizer or cooking the grain using a heating system is preferred, as this will prevent collapse of the rice grain, given that the convection currents in the water during cooking will be minimal. For dielectric heating or a steam convection oven, soft cooked rice that maintains its shape can be produced through heating under heating conditions of no more than 100°C, and preferably no more than 95°C, and more preferably no more than 89°C, followed by heating to no less than 100°C after no less than 10 minutes has elapsed and after the water content has been absorbed by the rice. A high water absorption rate and rapid water absorption speed can be used to steam and heat the rice after water absorption, such as in cooking glutinous rice.

With a liquid type enzyme preparation as the degrading enzyme solution, the preparation may be used as-is or may be diluted for use, and with a powdered degrading enzyme preparation, the preparation may be used in a state wherein the degrading enzyme is dissolved or dispersed in a solvent such as water. Preferably the pH of the degrading enzyme solution is in a range of between pH 3 and pH 10, and more preferably between pH 4 and pH 8. The pH may be adjusted to a pH that is optimal for an enzyme with high enzymatic activity, or adjusted to the same pH as the foodstuff for use. In adjusting the pH of the degrading enzyme solution, a pH adjusting agent, such as an organic acid such as citric acid, a salt thereof, a phosphate, or the like, may be used, and a pH-adjusted liquid seasoning, or the like, may be used.

In ingredients that are added to foodstuffs, ingredients and pH adjusting agents (organic acids or salts thereof), fragrances, stabilizing agents, emulsifying agents, oils and fats, vitamins, minerals, saccharides, common salt, sodium bicarbonate, various types of phosphates, amino acids, peptides, GABAs and thickening agents, trehalose, and other nutrients may be added. In particular, not only do thickening agent and saccharides have the effect of preventing softened foodstuffs from losing their shapes, but also have the effect of preventing aspiration in individuals who have difficulties with chewing or swallowing, while also having the effect of enhancing the starch preservative effects. The use of starch, modified starch, curdlan, agar, a gum such as guar gum, locust been gum, gellan gum, gum arabic, xanthan gum, or the like, or a thickening agent such as pectin, carboxymethylcellulose, carrageenan, or the like, can prevent the separation of water from the foodstuff when chewing, and can also adjust the adhesion and cohesion, producing a foodstuff that is ideal for individuals who have difficulty swallowing. The method for using the thickening agent might be that of dissolving in water, but preferably the method is one wherein the thickening agent and the enzyme are used in a dispersed state, without dissolving in water, and formed into a sol or gellified through heating after impregnation into the foodstuff, to produce a gel state, to impregnate the enzyme in a state wherein the enzyme solution is not mixed, so that there will be no enzymatic lysing and to avoid the reduction in the enzyme impregnation effect due to the viscosity that would occur if added simultaneously with the enzyme.

The oligosaccharides and carbohydrates, and thickening agents, contribute to preserving the starch, and produce an effect of preventing hardening of the processed product at low temperatures. The products of glycosylation enzymes have an inhibitory effect on starch retrogradation.

Along with monosaccharides, sugar alcohols such as sorbitol, xylitol, and the like, and disaccharides, such as maltose, trehalose, and the like, are preferred as saccharides. In particular, fats and oils are effective in enhancing caloric content, and the use of emulsified fats and oils can increase the concentration with which the oils and fats are introduced into the foodstuff, making it possible to produce a high-calorie foodstuff.

[Softened Processed Grain Product]

The softened processed grain product according to the present invention appears to the eye to be substantially no different from an ordinary cooked grain, but has hardness that is suitable as a foodstuff for use with individuals who are elderly or have difficulty in chewing or swallowing. Such processed softened grain products can also be applied to baby food.

The result of a hardness (internal stress) measurement of the softened processed grain product according to the present invention using a creep meter (RE2-33005B, manufactured by Yamaden) using a round cylindrical plunger with a diameter of 20 mm as a measurement condition, and a speed of 1 mm/s, with a strain rate of 60% and a temperature of 60°C as measurement conditions, with the sample filled into a stainless steel petri dish (with a diameter of 40 mm and a height of 15 mm) and the excess scraped off, is preferably between $5.0 \times 10^2$ N/m$^2$ and a $5.0 \times 10^4$ N/m$^2$, and more preferably between $1.0 \times 10^3$ N/m$^2$ and $2.0 \times 10^4$ N/m$^2$, and more preferably between $1.0 \times 10^3$ N/m$^2$ and $1.5 \times 10^4$ N/m$^2$, and even more preferably between $1.0 \times 10^3$ N/m$^2$ and $1.0 \times 10^4$ N/m$^2$.

From the perspective of providing a high-calorie meal, preferably the water content of the softened processed grain product of the present invention is between 60% and 90%, and more preferably between 60% and 80%. Foodstuffs for a variety of applications can be produced through, for example, adjusting the water content of the softened processed grain product to about 60%, equal to that of regular food, or adjusting to between 70 and 80%, which is equivalent to that of soft rice.

From the perspective of imparting sweetness, preferably the softened processed grain product includes glucose or maltose at no less than 100 mg/100 g, and more preferably at no less than 200 mg/100 g.

While the shape of the softened processed grain product will become congruently larger through swelling through applying moisture and heating, the swelling will not be perfectly uniform; however, preferably the spherical, ellipsoidal, oblate ellipsoidal, or other shape of the grain after post-threshing or after polishing is generally maintained, or is maintained completely without modification. In the present invention, producing a softened processed grain product using a processed grain product that maintains its shape can reduce a product that has a desirable shape, as described above.

[Embodiments]

The present invention will be explained in greater detail below using embodiments and reference examples; however, the present invention is not to be interpreted as limited to the examples set forth below.

In the embodiments and reference examples set forth below, α-amylase (Sumizyme™ L, manufactured by Shin Nippon Biomedical Laboratories), β-amylase (β-amylase F "Amano"™, manufactured by Amano Enzyme), and glucoamylase (Sumizyme manufactured by Shin Nippon Biomedical Laboratories) were used as the starch degrading enzymes. The α-amylase measurement kit (manufactured by Kikkoman BioChemifa) was used in measuring the enzymatic activity of the starch degrading enzymes. The enzymatic activity of a 0.1% aqueous solution of α-amylase was 550 units/g. Note that when enzymatic activity of α-amylase on various types of commercially available polished rice was measured, the maximum was 6 units/g and the minimum was 3.5 units/g.

In the embodiments and reference examples listed below, the grain water content was expressed by using an atmospheric pressure drying method to dry for five hours at 105°C, where the water content is expressed as:

$$((weight\ before\ drying)\text{-}(weight\ after\ drying))/(weight\ before\ drying)\ x\ 100.$$

In the embodiments and reference examples below, the degree of gelatinization of the grain was measured using the glucoamylase method. The degree of gelatinization is understood to differ depending on the measurement method. In addition to the gelatinized starch, retrogradation may have an effect. In this testing, the glucoamylase method was selected as the measurement method with the least variability. The glucoamylase method is described as an official method in the Standard for Feed Analysis (Food and Agricultural Materials Inspection Center) based on an analytical method that was partially improved by the Japan Food Research Laboratories. The glucoamylase used in this study was derived from Rhizopus sp., manufactured by FUJIFILM Wako Pure Chemicals Corporation, a product that is easily available as a domestic commercial product.

The method for measuring the degree of gelatinization is as described below. 25 mg of a sample crushed to a particle size no greater than 0.1 mm was placed in three test tubes and 2 mL of water was added accurately thereto, to prepare a uniform preparation using a test tube mixer. The three test tubes were defined, respectively, as (S), (R), and (R0). Precisely 1.6 mL of a 1 M acetate buffering solution and precisely 0.4 mL of water were added to (S). Without shaking, precisely 0.2 mL of a 40% sodium hydroxide solution was added to (R) and (R0) and heated for five minutes in a 65°C water bath to achieve complete gelatinization, and then, after water cooling, the result was neutralized through accurate adding of 1.6 mL of a 12% acetate solution, followed by adding another precisely 0.2 mL of water, to produce 4 mL. After pre-warming (S), (R), and (R0) for 10 minutes in a 37°C constant temperature bath, 1 mL of the glucoamylase solution (Rhizopus sp., Manufactured by FUJIFILM Waco Pure Chemical) was added to (S) and (R), and precisely 1 mL of that wherein the glucoamylase solution was inactivated by boiling for 8 minutes in a boiling water bath (a inactivated glucoamylase solution) was added to (R0), and while occasionally shaking, the samples were reacted for precisely 60 minutes in a constant temperature bath at 37°C. Note that the enzymatic activity of the added glucoamylase was measured in advance, to prepare a 2.63 U/mL glucoamylase solution. Here, when the glucoamylase acts on a soluble starch at 37°C, the amount of 1 μmol glucose generated in one minute was defined as 1 unit (U). Thereafter, the (S), (R), and (R0) were placed in a boiling water bath for precisely 8 minutes to deactivate the enzymes. After allowing to cool, (S), (R) and (R0) were transferred by water into flasks with total volumes of 200 mL, followed by adding water up to a reference line, and filtered using filter paper (5B) to produce respective sample solutions (S), (R), and (R0).

Following this, 1 mL each of these sample solutions (S), (R), and (R0) were carefully transferred to other test tubes, and after adding precisely 3 mL of a chromogenic solution (Glucose C-II Test Waco (Manufactured by FUJIFILM Waco Pure Chemical) to each and shaking, the samples were placed for five minutes in a 37°C constant temperature bath. Thereafter, the absorbance at a wavelength of 505 nm with comparison to the water as reference was measured. The degree of gelatinization was calculated using Equation (I), below, from the respective absorbance values:

$$Degree\ of\ Gelatinization\ (\%) = (AS\text{-} BR)/(AR\text{-} BR)\ x\ 100 \ldots (I)$$

(wherein:

AS: Absorbance at 505 nm in sample solution (S);
AR: Absorbance at 505 nm in sample solution (R);
BR: Absorbance at luck 505 nm in sample solution (R0)).

When the concentrations of glucose and maltose after normal cooking of commercially available polished rice (wherein the amount of water was between 1.3 times and 1.8 times) was measured using liquid chromatography, the results were each around 50 mg/100 g. Moreover, when the glucose and maltose concentrations after cooking commercially available no-wash rice with 1.5 times water added were measured similarly, they were, respectively, 40 mg/100 g and 20 mg/100 g.

(Embodiment 1)

Rice that included the externally derived starch degrading enzyme was prepared using the method described below. First 150 g of no-wash rice (non-glutinous rice) (with a water content of 14%) was dried using hot air at 105°C to remove water content of 6% (9 g) of the rice weight, to produce dry rice (with a water content of 8.5%). Next 8 g of a water-dissolved mixed enzyme solution of 5% $\alpha$-amylase and 1% $\beta$-amylase was sprayed onto the dried rice while stirring, and allowed to rest for 60 minutes, to produce a processed rice product that includes, in the interior of the rice, an externally derived $\alpha$-amylase. The processed rice product produced had a water content of 13.4%. Upon visual inspection, less than 30% of all the processed rice product produced had obvious defects, and the original shape of the no-wash rice was maintained. The result using the $\alpha$-amylase measurement kit to measure the enzymatic activity for the processed rice product that was produced was about 50 units/g, clearly higher than the $\alpha$-amylase enzymatic activity for various types of commercially available white rice. Moreover, when the degree of gelatinization of the processed rice product was measured using the glucoamylase method, the result was 44%, a value that was higher than the no-wash rice that was used, so it can be understood that the gelatinization advanced further than with commercially available white rice.

The processed rice product, described above, was immersed in 225 g of water and left for 10 minutes. Thereafter, the sample was heated and cooked, as described below, in a steam convection oven. The use of a steam convection oven in the testing was due to the ability to set the temperature conditions and the time accurately. A steam convection oven (TSCO-4 GBC, manufactured by Tanico) was used to heat at 150°C for 30 minutes in "Combination Mode," and steamed for 30 minutes, to produce softened cooked rice. The glucose and maltose concentrations of the softened cooked rice that was produced were, respectively, 420 mg/100 g and 280 mg/100 g. The softened cooked rice produced had strong sweetness and was soft, and, to the eye, the shapes of the rice grains were maintained as if it was normal cooked rice, so the shape was preserved well. For the softened cooked rice that was produced, the result of measuring the hardness (the breaking strength, using a RE2-33005B creep meter) under 60°C temperature conditions was 0.9 x $10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, and had good appearance and palatability.

(Embodiment 2)

Rice that included the externally derived starch degrading enzyme was prepared using the method described below. First 150 g of no-wash rice (non-glutinous rice) (with a water content of 14%) was dried using hot air at 105°C to remove water content of 6% (9 g) of the rice weight, to produce dry rice (with a water content of 8.5%). Next 8 g of a water-dissolved mixed enzyme solution of 5% $\alpha$-amylase and 1% glucoamylase was sprayed onto the dried rice while stirring, and allowed to rest for 60 minutes, to produce a processed rice product that includes, in the interior of the rice, an externally derived $\alpha$-amylase. The processed rice product produced had a water content of 13.4%. Upon visual inspection, less than 30% of all the processed rice product produced had obvious defects, and the original shape of the no-wash rice was maintained. The result using the $\alpha$-amylase measurement kit to measure the enzymatic activity for the processed rice product that was produced was about 50 units/g, clearly higher than the $\alpha$-amylase enzymatic activity for various types of commercially available white rice. Moreover, when the degree of gelatinization of the processed rice product was measured using the glucoamylase method, the result was the same as for the processed rice product of Embodiment 1, a value that was higher than the no-wash rice that was used, so it can be understood that the gelatinization advanced further than with commercially available white rice.

The processed rice product, described above, was immersed in 225 g of water and left for 10 minutes. Thereafter, the sample was heated and cooked, as described below, in a steam convection oven. A steam convection oven (TSCO-4 GBC, manufactured by Tanico) was used to heat at 150°C for 30 minutes in "Combination Mode," and steamed for 30 minutes, to produce softened cooked rice. The softened cooked rice produced had strong sweetness and was soft, and, to the eye, the shapes of the rice grains were maintained as if it was normal cooked rice, so the shape was preserved well. For the softened cooked rice that was produced, the result of measuring the hardness (the breaking strength, using a RE2-33005B creep meter) under 60°C temperature conditions was 0.9 x $10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, and had good appearance and palatability.

(Embodiment 3)

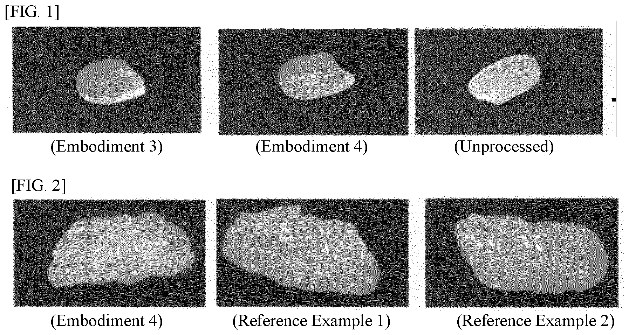

Rice that included the externally derived starch degrading enzyme was prepared using the method described below. First 150 g of no-wash rice (non-glutinous rice) (with a water content of 14%) was dried using hot air at 105°C, and vacuum dried, to remove water content of 7% (10.5 g) of the rice weight, to produce dry rice (with a water content of 7.5%). As with Embodiment 1, next 8 g of a water-dissolved mixed enzyme solution of 5% α-amylase and 1% β-amylase was sprayed onto the dried rice while stirring, and allowed to rest for 60 minutes, to produce a processed rice product that includes, in the interior of the rice, an externally derived α-amylase. The processed rice product produced had a water content of 12.5%. Upon visual inspection, less than 30% of all the processed rice product produced had obvious defects, and the original shape of the no-wash rice was maintained. A photograph of the shape of the processed rice product is given in FIG. 1. Additionally, a photograph of untreated no-wash rice is given in FIG. 1 as a control. The result using the α-amylase measurement kit to measure the enzymatic activity for the processed rice product that was produced was about 50 units/g, clearly higher than the α-amylase enzymatic activity for various types of commercially available white rice. Moreover, when the degree of gelatinization of the processed rice product was measured using the glucoamylase method, the result was somewhat higher than for the processed rice product of Embodiment 1, a value that was higher than the no-wash rice that was used, so it can be understood that the gelatinization advanced further than with commercially available white rice.

The processed rice product, described above, was immersed in 225 g of water and left for 10 minutes. Thereafter, the sample was heated and cooked, as described below, in a steam convection oven. A steam convection oven (TSCO-4 GBC, manufactured by Tanico) was used to set a first heating temperature of 87°C, below the boiling temperature, to heat for 30 minutes, followed by setting a second heating temperature of 150°C, above the boiling temperature, to heat for 10 minutes, to produce softened cooked rice. The softened cooked rice produced had strong sweetness and was soft, and, to the eye, the shapes of the rice grains were maintained as if it was normal cooked rice, so the shape was preserved well. For the softened cooked rice that was produced, the result of measuring the hardness (the breaking strength, using a RE2-33005B creep meter) under 60°C temperature conditions was $0.9 \times 10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, and had good appearance and palatability.

(Embodiment 4)

Rice that included the externally derived starch degrading enzyme was prepared using the method described below. First 150 g of no-wash rice (non-glutinous rice) (with a water content of 14%) was heated for between 1 and 2 minutes using a 600 W microwave oven, to remove water content of 7% (10.5 g) of the rice weight, to produce dry rice (with a water content of 7.5%). The dried rice was then soaked for 20 minutes in 300 g of a 0.1% α-amylase enzyme solution. Thereafter, the dried rice was removed from the enzyme solution and drained, to produce a processed rice product having externally derived α-amylase included in the interior of the rice. The processed rice product produced had a water content of 13%. Upon visual inspection, less than 30% of all the processed rice product produced had obvious defects, and the original shape of the no-wash rice was maintained. A photograph of the shape of the processed rice product is given in FIG. 1. The result using the α-amylase measurement kit to measure the enzymatic activity for the processed rice product that was produced was about 50 units/g, clearly higher than the α-amylase enzymatic activity for various types of commercially available white rice. Moreover, when the degree of gelatinization of the processed rice product was measured using the glucoamylase method, the result was somewhat higher than for the processed rice product of Embodiment 1, a value that was higher than the no-wash rice that was used, so it can be understood that the gelatinization advanced further than with commercially available white rice.

The processed rice product, described above, was immersed in 225 g of water and left for 10 minutes. Thereafter, the sample was heated and cooked, as described below, in a steam convection oven. A steam convection oven (TSCO-4 GBC, manufactured by Tanico) was used to set a first heating temperature of 93°C, below the boiling temperature, to heat for 30 minutes, to produce softened cooked rice. For the softened cooked rice that was produced, the result of measuring the hardness (the breaking strength, using a RE2-33005B creep meter) under 60°C temperature conditions was $1.4 \times 10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, with an appearance that maintained the shape of the rice grains as with ordinary cooked rice, and having good palatability. A photograph of the shape of the softened cooked rice is given in FIG. 2.

(Embodiment 5)

Rice that included the externally derived starch degrading enzyme was prepared using the method described below. First 150 g of no-wash rice (non-glutinous rice) (with a water content of 14%) was dried using hot air at 105°C to remove water content of 8% (12 g) of the rice weight, to produce dry rice (with a water content of 6.5%). The dried rice was then soaked for 30 minutes in a 0.1% α-amylase enzyme solution (with 1.5 times the volume of the dry rice). Thereafter, the dried rice was removed from the enzyme solution and drained, to produce a processed rice product having externally derived α-amylase included in the interior of the rice. The processed rice product produced had a water content of 13%. Upon visual inspection, less than 30% of all the processed rice product produced had obvious defects, and the original shape of the no-wash rice was maintained. The result using the α-amylase measurement kit to measure the enzymatic activity for the processed rice product that was produced was about 50 units/g, clearly higher than the α-amylase enzymatic activity for various types of commercially available white rice. Moreover, when the degree of gelatinization of the processed rice product was measured using the glucoamylase method, the result was somewhat higher than for the processed rice product of Embodiment 1, a value that was higher than the no-wash rice that was used, so it can be understood that the gelatinization advanced further than with commercially available white rice.

After immersing the processed rice product, described above, in 225 g water, the product was cooked through heating, as described below, using a steam convection oven. A steam convection oven (TSCO-4 GBC, manufactured by Tanico) was used to heat at 150°C for 30 minutes in "Combination Mode," and steamed for 30 minutes, to produce softened cooked rice. For the softened cooked rice that was produced, the result of measuring the hardness (the breaking strength, using a RE2-33005B creep meter) under 60°C temperature conditions was $0.8 \times 10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, with an appearance that maintained the shape of the rice grains as with ordinary cooked rice, and having good palatability.

(Embodiment 6)

Rice that included the externally derived starch degrading enzyme was prepared using the method described below. First 150 g of no-wash rice (non-glutinous rice) (with a water content of 14%) was dried using hot air at 105°C to remove water content of 4% (6 g) of the rice weight, to produce dry rice (with a water content of 10.4%). The dried rice was then soaked for 30 minutes in a 0.1% α-amylase enzyme solution (with 1.5 times the volume of the dry rice). Thereafter, the dried rice was removed from the enzyme solution and drained, to produce a processed rice product having externally derived α-amylase included in the interior of the rice. The processed rice product produced had a water content of 13%. Upon visual inspection, less than 30% of all the processed rice product produced had obvious defects, the original shape of the no-wash rice was maintained, and the water content was 13%. The result using the α-amylase measurement kit to measure the enzymatic activity for the processed rice product that was produced was about 50 units/g, clearly higher than the α-amylase enzymatic activity for various types of commercially available white rice. Moreover, when the degree of gelatinization of the processed rice product was measured using the glucoamylase method, the result was somewhat lower than for the processed rice product of Embodiment 1, a value that was higher than the no-wash rice that was used, so it can be understood that the gelatinization advanced further than with commercially available white rice.

After immersing the processed rice product, described above, in 225 g water, the product was cooked through heating, as described below, using a steam convection oven. A steam convection oven (TSCO-4 GBC, manufactured by Tanico) was used to heat at 150°C for 30 minutes in "Combination Mode," and steamed for 30 minutes, to produce softened cooked rice. For the softened cooked rice that was produced, the result of measuring the hardness (the breaking strength, using a RE2-33005B creep meter) under 60°C temperature conditions was $1.1 \times 10^4$ N/m$^2$, so was of adequate softness for use with individuals with difficulties in chewing or swallowing. Consequently, the softened cooked rice was provided with physical properties that were adequate for a special-needs diet, and was safe for individuals with difficulties in chewing, with an appearance that maintained the shape of the rice grains as with ordinary cooked rice, and having good palatability.

(Reference Example 1)

Without drying 150 g of no-wash rice (non-glutinous rice) (with a water content of 14%), and without causing gelatinization of the no-wash rice, the grain was soaked for 30 minutes in 225 g of water, and cooked through heating in a steam convection oven. A steam convection oven (TSCO-4 GBC, manufactured by Tanico) was used to heat at 150°C for 30 minutes in "Combination Mode," and steamed for 30 minutes, to produce cooked rice. The shape of the cooked rice that was produced maintained the shape of the rice grains, as with ordinary cooked rice. However, for the cooked rice that was produced, the result of measuring the hardness (the breaking strength, using a RE2-33005B creep meter) under 60°C temperature conditions was $2.7 \times 10^4$ N/m$^2$, so was not soft when compared to the cooked rice in Embodiment 1. A photograph of the shape of the cooked rice is given in FIG. 2.

(Reference Example 2)

First 150 g of no-wash rice (non-glutinous rice) (with a water content of 14%) was dried using hot air at 105°C to remove water content of 6% (9 g) of the rice weight, to produce dry rice (with a water content of 8.5%). Following this, after soaking the dried rice for 30 minutes in 225 g of water, it was cooked through heating in a steam convection oven. A steam convection oven (TSCO-4 GBC, manufactured by Tanico) was used to heat at 150°C for 30 minutes in "Combination Mode," and steamed for 30 minutes, to produce cooked rice. The shape of the cooked rice that was produced maintained the shape of the rice grains, as with ordinary cooked rice. However, for the cooked rice that was produced, the result of measuring the hardness (the breaking strength, using a RE2-33005B creep meter) under 60°C temperature conditions was $2.6 \times 10^4$ N/m$^2$, so was not soft when compared to the cooked rice in Embodiment 1. A photograph of the shape of the cooked rice is given in FIG. 2.

(Reference Example 3)

Without drying 150 g of no-wash rice (non-glutinous rice) (with a water content of 14%), and without causing gelatinization of the no-wash rice, the grain was soaked for 30 minutes in a 0.1% $\alpha$-amylase enzyme solution (with 1.5 times the volume of the dry rice). The no-wash rice was then removed from the enzyme solution and drained. Following this, after immersing the rice in 225 g of water, it was cooked through heating, as follows, in a steam convection oven. A steam convection oven (TSCO-4 GBC, manufactured by Tanico) was used to heat at 87°C for 30 minutes, followed by heating at 150°C for 10 minutes in "Combination Mode," and steamed for 30 minutes, to produce cooked rice. For the cooked rice that was produced, the result of measuring the hardness (the breaking strength, using a RE2-33005B creep meter) under 60°C temperature conditions was $1.7 \times 10^4$ N/m$^2$, so was not soft when compared to the cooked rice in Embodiment 1.

(Embodiment 7)

Barley grain (Nippon Seibarai) and round barley (Comsense Co., Ltd.) were used to prepare enzyme-containing barley that included externally derived degrading enzymes through the method described below. First 150 g of raw barley material (with a water content of 14%) was dried using hot air at 105°C to remove water content of 5% (7.5 g) of the barley weight, to produce dry barley (with a water content of 9.5%). Next, 7.5 g of a 1% hemicellulase (Hemicellulase, Amano 90, manufactured by Amano Enzyme) enzyme solution were sprayed onto the dried barley. A barley processed product that includes an externally derived hemicellulose in the interior of the barley was produced.

Note that in measuring the activity of the cellulase included in the enzyme preparation described above, for each enzymatic activity one unit (U) was defined as the enzymatic activity required to reduce by half the solution viscosity when the enzymatic reaction was carried out for 10 minutes at 40°C in the substrate solution. The substrate solution for measuring the cellulase activity was produced through dissolving carboxymethyl cellulose (WACO Pure Chemical) in a pH 5.0 50 mM sodium citrate buffering solution to reach 1.0% (w/v). 1 mL of the enzyme solution was added to 10 mL of the substrate solution and enzymatically reacted for 10 minutes at 40°C, and the solution viscosity after the reaction was measured by a cone and plate-type viscometer (DVM-E2, manufactured by Toki Sanyo). The activity of the cellulase included in the enzyme-impregnated grain wherein the 2% hemicellulose Amano 90 enzyme solution was sprayed at a 5% volume onto the grain that had a water content of 10% was 49.6 U/g.

The processed barley products produced had a water content of 12%. For each of the barley processed products produced, upon visual inspection less than 30% of all the product produced had obvious defects, and the original shape of the barley grains and round barley was maintained.

Next 150 g each of the enzyme-including dry grain barley and round barley, described above, were used in the respective experiments below. After immersing the respective enzyme-including dried barleys in 300 g of water, they were cooked through heating, as follows, in a steam convection oven. A steam convection oven (TSCO-4 GBC, manufactured by Tanico) was used to heat at 60°C for 30 minutes in "Combination Mode," followed by heating at 150°C for 20 minutes, and steaming for 30 minutes, to produce softened cooked grain. For the softened cooked barley that was produced, the result of measuring the hardness (the breaking strength, using a RE2-33005B creep meter) under 60°C temperature conditions was $0.9 \times 10^4$ N/m$^2$, so was of adequate softness for use with individuals with difficulties in chewing or swallowing. Moreover, the characteristic dryness of the barley was eliminated completely, and thickness was evident, and the softened cooked barley with easy to eat as a special-needs diet and had adequate physical properties, and was safe for individuals with difficulties in chewing, with an appearance that maintained the shape of the original barley grains as with ordinary cooked grain barley and round barley, and having good palatability.

(Reference Example 4)

Barley grain (Nippon Seibarai) and round barley (Comsense Co., Ltd.), which are polished barley products, were used to prepare enzyme-containing barley that included externally derived degrading enzymes through the method described below, without performing a process to remove the water content. First 7.5 g of a 1.0% hemicellulose (Hemicellulose Amano 90, manufactured by Amano Enzyme) enzyme solution was sprayed onto 150 g of a barley raw material (with a water content of 14%). After immersing 150 g of round barley and grain barley in 300 g of water, they were cooked through heating, as follows, in a steam convection oven. A steam convection oven (TSCO-4 GBC, manufactured by Tanico) was used to heat at 60°C for 30 minutes in "Combination Mode," followed by heating at 150°C for 20 minutes, and steaming for 30 minutes, to produce softened cooked grain. For the softened cooked barleys that were produced, the result of measuring the hardness (the breaking strength, using a RE2-33005B creep meter) under 60°C temperature conditions was $2.5 \times 10^4$ N/m² for each, so the product was not usable in terms of physical properties for individuals that have difficulty in chewing swallowing, given its dryness and non-uniform physical properties, that is, there were some parts that were some parts of the product that were hard.

[Area of Application in Industry]

The use of the processed grain product according to the present invention enables easy manufacturing of a softened processed grain product for individuals that are elderly or that have difficulties in chewing or swallowing, with good distribution properties, and without requiring specialty equipment.

**Claims**

1. A processed grain product that maintains a post-threshing or post-polishing shape, wherein:

    a portion of the starch included in the processed grain product is the gelatinized, and the degree of gelatinization is between 15% and 85%;
    an externally derived degrading enzyme is included in a state that has enzymatic activity; and
    the water content is less than 15%.

2. A processed grain product set forth in claim 1, wherein:
   the externally derived degrading enzyme includes at least α-amylase.

3. A processed grain product set forth in claim 2, wherein:
   the externally derived degrading enzyme further includes β-amylase and/or glucoamylase.

4. A processed grain product set forth in claim 2, wherein:
   the processed grain product includes α-amylase with a lysing enzymatic activity of no less than 10 units/g.

5. A processed grain product set forth in any one of claims 1 through 4, wherein:
   a raw material for the processed grain product is non-glutinous rice.

6. A processed grain product set forth in claim 1, wherein:

    a raw material for the processed grain product is other than non-glutinous rice; and
    the externally derived degrading enzyme includes a degrading enzyme that is at least one selection from a group including cellulase, pectinase, and hemicellulase.

7. A processed grain product set forth in claim 6, wherein:
   the processed grain product includes a degrading enzyme of at least one type selected from a group including cellulase, pectinase, and hemicellulase, having lysing enzymatic activity of no less than 10 units/g.

8. A method for manufacturing a processed grain product that maintains a post-threshing or post-polishing shape, and wherein the water content is less than 15%, including:

a step for drying the grains before or after post-threshing or post-polishing to adjust the water content to between 4% and 12%;

a step for causing an enzyme solution or enzyme powder that includes a degrading enzyme to contact the grain after drying with the water content of the grain in a range that is maintained at less than 15%.

9. A processed grain product manufacturing method set forth in claim 8, wherein:
the drying of the grain is carried out at a temperature that is no greater than 85°C.

10. A processed grain product manufacturing method set forth in claim 8 or 9, wherein:
the drying of the grain gelatinized is a portion of the starch that is included in the grain.

11. A method for manufacturing a softened processed grain product that maintains a post-threshing or post-polishing shape, including:

a step for drying the grains before or after post-threshing or polishing to adjust the water content to between 4% and 12%; and

a step for causing an enzyme solution or an enzyme powder that includes a degrading enzyme to contact the grain after drying; and

the grain that has been contacted by the degrading enzyme is heated to soften the grain through an enzymatic reaction.

12. A softened processed grain product manufacturing method set forth in claim 11, wherein:
the heating of the grain into which the degrading enzyme has been introduced is carried out until gelatinizing, after being carried out for at least 10 minutes at less than the boiling temperature as a mixture with water.

13. A softened processed grain product manufacturing method as set forth in claim 11 or 12, wherein:
the softened processed grain product includes no less than 100 mg/100 g of glucose or maltose, and the water content is between 60% and 90%.

14. A softened processed grain product manufacturing method set forth in any of claims 11 through 13, wherein:
the softened processed grain product has a measured value for hardness, at a temperature of 60°C, of between $5.0 \times 10^2$ N/m$^2$ and 5.0 x $10^4$ N/m$^2$.

EP 4 094 587 A1

[FIG. 1]

(Embodiment 3)    (Embodiment 4)    (Unprocessed)

[FIG. 2]

(Embodiment 4)    (Reference Example 1)    (Reference Example 2)

17

## INTERNATIONAL SEARCH REPORT

| International application No. |
|---|
| PCT/JP2021/000966 |

**A. CLASSIFICATION OF SUBJECT MATTER**
A23L 7/10(2016.01)i; C12N 9/26(2006.01)n; C12N 9/42(2006.01)n
FI: A23L7/10 Z; A23L7/10 E; A23L7/10 A; C12N9/26 A; C12N9/42

According to International Patent Classification (IPC) or to both national classification and IPC

**B. FIELDS SEARCHED**

Minimum documentation searched (classification system followed by classification symbols)
A23L7/10; C12N9/26; C12N9/42

Documentation searched other than minimum documentation to the extent that such documents are included in the fields searched
Published examined utility model applications of Japan          1922–1996
Published unexamined utility model applications of Japan        1971–2021
Registered utility model specifications of Japan                1996–2021
Published registered utility model applications of Japan        1994–2021

Electronic data base consulted during the international search (name of data base and, where practicable, search terms used)
JSTPlus/JMEDPlus/JST7580 (JDreamIII); CAplus/MEDLINE/EMBASE/BIOSIS/WPIDS
(STN); FSTA (STN); 日経テレコン(Nikkei Telecom)

**C. DOCUMENTS CONSIDERED TO BE RELEVANT**

| Category* | Citation of document, with indication, where appropriate, of the relevant passages | Relevant to claim No. |
|---|---|---|
| A | JP 2003-102408 A (BIO TEC JAPAN KK) 08 April 2003 (2003-04-08) | 1-14 |
| A | JP 2019-024498 A (UNIV CENTRAL SOUTH FORESTRY & TECHNOLOGY) 21 February 2019 (2019-02-21) | 1-14 |
| A | JP 63-007755 A (MATSUTANI CHEMICAL INDUSTRY CO., LTD.) 13 January 1988 (1988-01-13) | 1-14 |
| A | JP 2018-121630 A (CHRISTAR CORPORATION KK.) 09 August 2018 (2018-08-09) | 1-14 |
| A | WO 2014/087705 A1 (CHRISTAR CORPORATION KK.) 12 June 2014 (2014-06-12) | 1-14 |

☐ Further documents are listed in the continuation of Box C.          ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 March 2021 (10.03.2021) | 23 March 2021 (23.03.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2021/000966

| Patent Documents referred in the Report | Publication Date | Patent Family | Publication Date |
|---|---|---|---|
| JP 2003-102408 A | 08 Apr. 2003 | (Family: none) | |
| JP 2019-024498 A | 21 Feb. 2019 | CN 107242447 A | |
| JP 63-007755 A | 13 Jan. 1988 | (Family: none) | |
| JP 2018-121630 A | 09 Aug. 2018 | (Family: none) | |
| WO 2014/087705 A1 | 12 Jun. 2014 | US 2016/0007645 A1 | |

Form PCT/ISA/210 (patent family annex) (January 2015)

**EP 4 094 587 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3686912 B
- JP 2006223122 A
- JP 2008011794 A
- JP 2010115164 A
- JP 2015023800 A
- JP 2011172564 A
- JP H731396 A
- JP 2011193876 A
- JP 2008187908 A
- JP 2003153657 A
- JP 2008131887 A
- JP 2002017275 A
- JP H670707 A